# EUROPEAN PATENT SPECIFICATION

(11) **EP 1 676 035 B1**
(45) Date of publication and mention of the grant of the patent: **11.12.2013**
(21) Application number: 04793935.0
(22) Date of filing: 01.10.2004
(51) Int. Cl.: F16B 37/12, F16B 13/00

(54) **SELF-DRILLING ANCHOR**
SELBSTBOHRENDER ANKERBOLZEN
ANCRAGE AUTOPERCEUR

(30) Priority: 10.10.2003 US 510708 P; 09.03.2004 US 934913; 12.05.2004 US 844706
(43) Date of publication of application: 05.07.2006
(73) Proprietor: ILLINOIS TOOL WORKS INC., Glenview Illinois 60026-1215 (US)
(72) Inventor: PANASIK, Cheryl, L., Elburn, IL 60119 (US); ERNST, Richard, J., San Diego, CA 92130 (US)
(74) Representative: Bloch, Gérard
(86) International application number: PCT/US2004/032281
(87) International publication number: WO 2005/038275

(56) References cited:
- DE-C- 545 634

## Description

This application is a continuation-in-part of U.S. patent application Ser. No. 10/844,706, filed on May 12, 2004, which claims priority to U.S. Provisional Application No. 60/510,708, filed on October 10, 2003.

### BACKGROUND OF THE INVENTION

### 1. Field of the Invention

The present invention is directed to an anchor for use in a friable material, particularly to a self-drilling anchor to be used in drywall mounted to a member.

### 2. Description of the Related Art

Because drywall is a friable material, mounting articles thereto can be difficult. In the past, at least three methods have been used. For light weight articles, small plastic expansion anchors have been used. These expansion anchors have typically required three steps to install: first, a hole is drilled into the drywall; second, the anchor insert is driven into the drilled hole; and finally, a threaded fastener is advanced into the anchor, spreading the anchor into engagement with the drywall. However, expansion anchors can typically hold light loads only.

For heavy duty applications, toggle bolts have been used. While toggle bolts have been effective, they are also generally expensive because they involve parts which must move relative to one another. Toggle bolts also have been known to be difficult to install.

Self-drilling anchors for mounting heavier loads also have been used. These self-drilling anchors typically are installed by drilling into the drywall with the anchor itself. The anchor also includes threading having a high thread height to provide a high pullout in the drywall. Examples of self-drilling anchors include the anchor sold under the trademark E-Z ANCOR manufactured by ITW Buildex, and those disclosed in U.S. Patents 4,601,625, 5,190,425, and 5,558,479, all of which are assigned to the assignee of this application.

Self-drilling anchors have proved effective for holding higher loads when installed in drywall alone. However, in most cases the drywall is mounted to wood support members, or studs, that are unseen by the user, and typically the location of these support members are unknown and unchecked by the user. When a user of a typical self-drilling fastener attempts to install the anchor in drywall at a location of a support member, the anchor is unable to drill into the support member, causing the anchor to spin in place so that the anchor's high threading strips out the drywall, resulting in failure of the anchor and creating an unsightly scar on the wall. Even if the anchor is able to drill into the support member slightly, the anchors have been known to tightly engage the support member and break due to torsion on the anchor.

Drywall anchors typically have a head or flange that is larger than the outer diameter of the drywall threading to prevent the anchor from being driven through the drywall as the anchor is installed. However, large anchor heads have been known to displace drywall as the anchors are driven, causing drywall at the surface to bulge up around the anchor, conventionally referred to as blistering of the drywall. The large outer diameter of the drywall threading may also cause displacement of drywall leading to blistering. Blistering creates puffing at the drywall surface which is unsightly and unappealing and may make it difficult to mount some articles to drywall so that the article is flush with the drywall surface.

What is needed is a self-drilling anchor for use in drywall that reduces drywall blistering without reducing holding strength.

### BRIEF SUMMARY OF THE INVENTION

A self-drilling anchor is provided for use in a friable material including a body having an axial bore for receiving a fastener, a proximal end, a drilling end, a proximal portion adjacent the proximal end having threading for engaging the friable material, and a drilling portion adjacent the drilling end, and a head at the proximal end having an outer diameter that is smaller than an outer crest diameter of the threading. The smaller head minimizes visible distortion of the friable material as the anchor is advanced into the friable material. In one embodiment, the threading includes a generally flat land at its crest to help minimize the visible distortion of the friable material as the anchor is driven. Document DE 545634 discloses a self-drilling anchor comprising a body having an axis, an axial bore adapted to receive a fastener, a drilling end, a head and a threading having a root and a crest diameter.
Though DE 545634 discloses a self-drilling anchor with some features similar to those of the anchor of the instant case, the anchor of this prior art had been proposed for solving the problem to having to push an anchor into the wall first before being able to screw it. Moreover, the anchor of this reference could not be used in a friable material.

In another embodiment, a self-drilling anchor is provided for use in a friable material mounted on a substrate having a body having an axis, an axial bore for receiving a fastener, a proximal end, a high-threaded proximal portion adjacent the proximal end having threading for engaging the friable material, and a self-drilling portion having threading for engaging the substrate and a length longer than a thickness of the drywall, wherein the threading of the proximal portion has a root diameter and a crest diameter, wherein the threading of the self-drilling portion has a root diameter and a crest diameter substantially smaller than the crest diameter of the proximal portion, and a head at the proximal end having an outer diameter that is smaller than the crest diameter of the threading. In one embodiment, the outer diameter of the head is between about 1 and about 1.5 times the size of the root diameter.

These and other features and advantages are evident from the following description of the present invention, with reference to the accompanying drawings.

### BRIEF DESCRIPTION OF THE SEVERAL VIEWS OF THE DRAWINGS

FIG. 1 is a perspective view of a self drilling anchor according to the background of the present invention.
FIG. 2 is a side view of the self drilling anchor of Fig.1, showing a break-off tip embodiment.
FIG. 3 is a side-sectional view of the break-off tip embodiment of the self drilling anchor of Fig.1
FIG. 4 is a side-sectional view of the break-off tip embodiment of the self drilling anchor of Fig.1 installed in a friable material and a support member.
FIG. 5 is a perspective view of the break-off tip embodiment of the self drilling anchor of Fig.1 installed in a friable material only, shown from the back side of the friable material.
FIG. 6 is a side view of the break-off tip embodiment of the self drilling anchor of Fig.1 having an alternative drilling tip.
FIG. 7 is a side-sectional view of the break-off tip embodiment of an installed self drilling anchor of Fig.1 with a mounting fastener inserted through the self drilling anchor.
FIG. 8 is a side-sectional view of a break-off flange embodiment of the self drilling anchor.
FIG. 9 is a side view of a split tip embodiment of the self drilling anchor.
FIG. 10 is a side-sectional view of the split tip embodiment of the self drilling anchor with a mounting fastener inserted through the anchor.
FIG. 11 is a side view of a can-opener embodiment of the self drilling anchor.
FIG. 12 is a side-sectional view of the can-opener embodiment of the self drilling anchor.
FIG. 13 is a side-sectional view of the can-opener embodiment of the self drilling anchor installed with a mounting fastener inserted into the self drilling anchor.
FIG. 14 is a side view of a tip bypass embodiment of the self drilling anchor.
FIG. 15 is a side-sectional view of the tip bypass embodiment of the self drilling anchor.
FIG. 16 is a side view of the tip bypass embodiment of the self drilling anchor having an alternative drilling tip.
FIG. 17 is a side-sectional view of the tip bypass embodiment of the self drilling anchor with a mounting fastener beginning to pierce the anchor.
FIG. 18 is a side-section view of the tip bypass embodiment of the self drilling anchor with the mounting fastener bypassing the drilling tip.
FIG. 19 is a side view of an open tip embodiment of the self drilling anchor.
FIG. 20 is a side-sectional view of an open mold for forming the self drilling anchor.
FIG. 21 is a side-sectional view of the mold closed for forming the self drilling anchor.
FIG. 22 is a perspective view of a self-drilling anchor having a small head for preventing drywall blistering of the invention
FIG. 23 is a side view of the small head embodiment of the self-drilling anchor.
FIG. 24 is an end view of the small head embodiment of the self-drilling anchor.
FIG. 25 is a side view of an alternative head and cap embodiment of the small head self-drilling anchor.

### DETAILED DESCRIPTION OF THE INVENTION

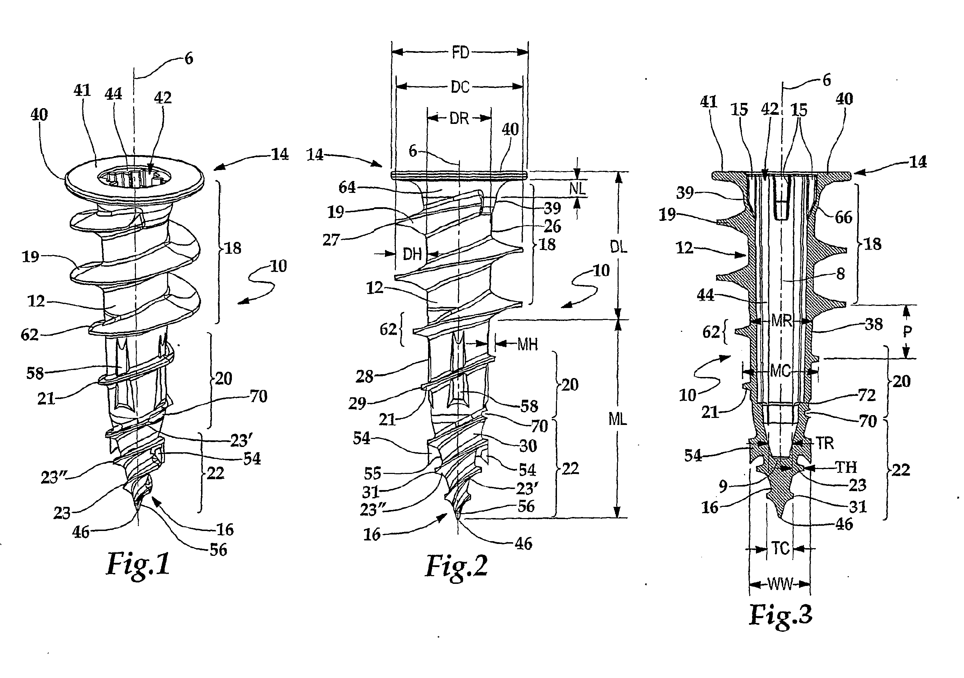

Referring to FIGS. 1-4, a self-drilling anchor 10 is shown. Here, anchor 10 is described in its general aspects and then, below, with respect to several exemplary embodiments, including the break-off tip embodiment shown in FIGS. 1-4, and 7.

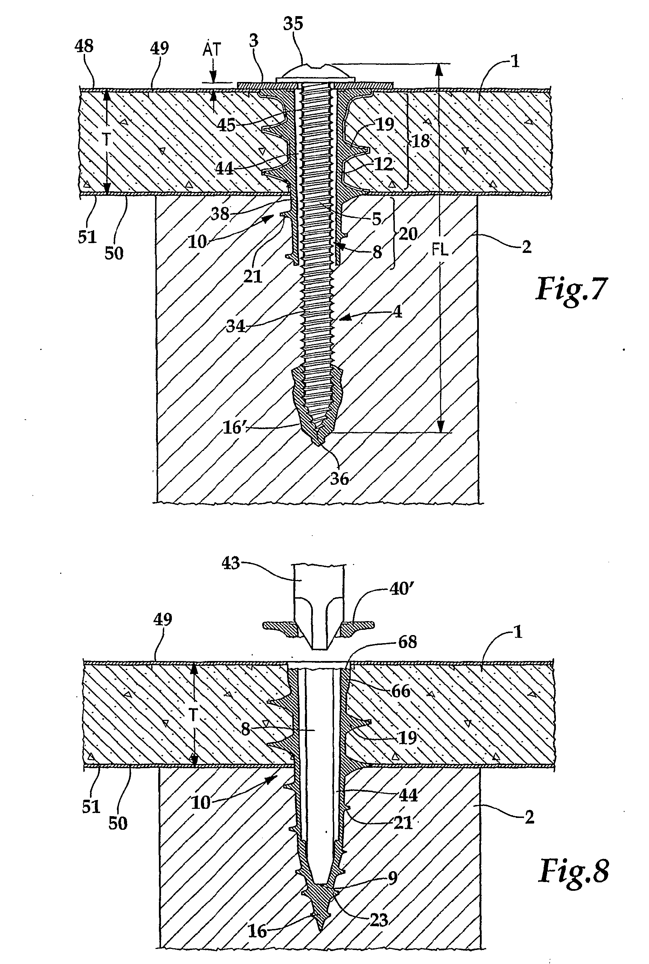

Anchor 10 is for use in a friable material, such as drywall 1, mounted on a member, such as a support member 2, the novel anchor 10 having an elongated body 12 with an axis 6, an axial bore 8 adapted to receive an elongated mounting fastener 4 (see FIG. 7), a flared end 14 having torque transmitting surfaces 15 therein, a proximal portion 18 proximate flared end 14, an intermediate portion 20, a distal portion 22, and a drilling tip 16 generally opposite flared end 14, wherein proximal portion 18 has a threaded exterior, such as drywall gripping threading 19, having a root 26, a crest 27 with a crest diameter DC, and a thread height DH, intermediate portion 20 has a threaded exterior, such as member gripping threading 21, having a root 28, a crest 29 with a crest diameter MC substantially smaller than drywall gripping threading crest diameter DC, and a thread height MH substantially smaller than drywall gripping thread height DH, and distal portion 22 has a threaded exterior, such as drilling threading 23, having a root 30 that tapers toward drilling tip 16, a crest 31 with a crest diameter TC substantially smaller than drywall gripping threading crest diameter DC, and a thread height TH substantially smaller than drywall gripping thread height D H.

Anchor 10 is for driving into drywall 1 for mounting an article 3 to drywall 1, as shown in FIG. 7. After anchor 10 is installed, a mounting fastener 4 is inserted through article 3 and into bore 8 of anchor 10. Anchor 10 provides stronger engagement and higher pullout strength than mounting fastener 4 alone. Anchor 10 can be used in a manner similar to traditional self-drilling anchors when it is being installed in drywall 1 only. However, anchor 10 includes features that allow anchor 10 to penetrate and engage in a support member 2, such as a wood support stud, and that provide added strength to withstand the large forces of driving anchor 10 into drywall 1 and support member 2.

The friable material can be one of several friable materials used in construction wherein it is desired to mount an article 3 to the friable material in order to increase the amount of load that the friable material can withstand. An example of the friable material is gypsum based drywall 1, such as the gypsum drywall sold under the trademark SHEETROCK by United States Gypsum. Drywall 1 typically has a thickness T of 1, 27 cm (1/2 inch) or 1, 58 cm (5/8 inch), but it can be obtained in other thicknesses, such as 0, 95 cm (3/8 inch).

Typically, friable materials such as drywall 1 are mounted to a member, such as a wood structural support member, plywood, or another friable material, such as another layer of drywall. The member can be a support member 2, such as a wood support member, for example a 2 x 4 stud or the like, evenly spaced from other wood studs, e.g. every 40,64 cm (16 inches), or a metal support member, such as a steel support stud. Support members are substantially more resistant to pullout than drywall 1 because they are much less likely to break apart. Although anchor 10 can be used on drywall 1 mounted to another sheet of drywall, or other friable materials, the present invention will be described for use with support members 2 such as a wood support stud.

Turning to FIG. 7, mounting fastener 4 is preferably a threaded fastener, such as a mounting screw, having an elongate shank 34 with a head 35 at one end and a tip 36 at the other. Shank 34 of mounting fastener 4 includes threading 5 which engages with interior bore 8 of anchor 10. Threading 5 of mounting fastener 4 can be of a standardized thread form, such as Unified Coarse (UNC) or Unified Fine (UNF) threading, or threading 5 can be of a specialized thread form. Mounting fastener 4 can be a standard #6, #7 or #8 UNC screw, wherein head 35 has a Phillips recess, and a total elongate length FL of between about 1,27 cm (1/2 inch) inches and about 5,08 cm (2 inches) or more, preferably about 3,17 cm (1^{¼} inches). Mounting fastener 7 can have a thread density of between about of 3,14 threads per cm (8 threads per inch) and about 7,09 threads per cm (8 threads per inch) preferably about 5,91 threads per cm (15 threads per inch).

Mounting fastener 4 can have different lengths to accommodate different thicknesses AT of article 3. Preferably, anchor 10 is designed so that a long mounting fastner 4 can be used with anchor 10 if article 3 is relatively thin, as shown in FIG. 7, or relatively thick, in which case there is a need for greater length to achieve engagement with anchor 10. Anchor 10 allows for mounting fasteners 4 that are longer than anchor 10 because anchor 10 has a geometry that allows mounting fastener tip 36 to extend beyond the original position of drilling tip 16, as described below. Because anchor 10 allows tip 36 of mounting fastener 4 to extend past drilling tip 16, anchor 10 can be shorter than mounting fastener 4. A shorter anchor 10 is preferred because it limits the depth of embedment in support member 2, thereby reducing the associated installation torque, and because it is less expensive to manufacture, easier to handle and to keep stable during installation, and it has a shorter drive time so that a user can install a plurality of anchors 10 in a relatively short period of time with a minimum of effort.

### ANCHOR

Turning to FIGS. 2, 3, and 7, anchor 10 includes a generally hollow elongate body 12 having an axis 6, a thin wall 38 surrounding an axial bore 8 adapted to receive mounting fastener 4, wherein axial bore 8 has an elongated generally cylindrical portion and a set of splines 44 adapted to receive elongated threaded mounting fastener 4. A flange 40 is located at flared end 14 of body 12, wherein flange 40 includes torque transmitting surfaces therein, such as surfaces 15 in a Phillips-type recess 42, which may be a Phillips Square Drive to minimize cam-out, an axially extending proximal portion 18 proximate flared end 14, an axially extending intermediate portion 20 between proximal portion 18 and distal portion 22, an axially extending distal portion 22, and a drilling tip 16 generally opposite flared end 14, wherein intermediate portion 20 tapers toward distal portion 22 and distal portion 22 tapers toward drilling tip 16. Anchor 10 is preferably manually drivable by a hand-powered screwdriver, which may be a Phillips screwdriver or the like, or by a power driver.

In the embodiment shown in FIGS. 1-3, anchor body 12 includes a first exterior thread 19, 21, 23' disposed on proximal portion 18, intermediate portion 20, and distal portion 22 and a second exterior thread 23" disposed on distal portion 22, where second exterior thread 23" is between first exterior thread 23' on distal portion 22. Both first exterior thread 19, 21, 23' and second exterior thread 23" have a crest and a lead 56 proximate drilling tip 16. First exterior thread 19 at proximal portion 18 has a crest diameter DC and a high thread height DH for gripping drywall 1. First exterior thread 21 at intermediate portion 20 has a crest diameter MC substantially smaller than crest diameter DC and a thread height MH substantially smaller than the high thread height DH. First exterior thread 23' at distal portion 22 has a crest diameter TC substantially smaller than crest diameter DC and a thread height TH substantially smaller than the high thread height DH. There is a transition zone 62 on first thread 19, 21, 23' between the high thread height DH and the thread height MH. Second exterior thread 23" has a crest diameter TC substantially smaller than crest diameter DC and a thread height TH substantially smaller than the high thread height DH.

Continuing with FIG. 7, preferably anchor 10 has a means for permitting mounting fastener tip 36 to extend beyond the original position of drilling tip 16 of anchor 10 when anchor 10 is installed. Anchor 10 can have a thin wall 38 to allow mounting fastener 4 to pierce through anchor 10 so that mounting fastener tip 36 can extend past drilling tip 16 of anchor 10. Thin wall 38 allows the root diameter of anchor 10 to be smaller, resulting in a lower required installation torque. Additionally, thin wall 38 allows anchor 10 to receive mounting fasteners 4 having relatively large outer diameters, while still having an anchor 10 with a relatively small root. For example, if wall 38 has a thickness of about 0,5 cm (0.02 inch) and a set of splines 44 that are large enough, as described below, anchor 10 can receive a # 6 threaded mounting fastener, having an outer diameter of about 0,35 cm (0.14 inch) or a #8 threaded mounting fastener, having an outer diameter of about 0,4 cm (0,16 inch) without the mounting fastener threading 5 tapping into wall 38. Also, thin wall 38 allows anchor 10 to be made from less material so that anchor 10 is less expensive to manufacture. In one embodiment, the thickness of anchor wall 38 is between about 0,02 cm (0.01 inch) and about 0,12 cm (0.05 inch), preferably between about 0,038 cm (0.015 inch) and about 0,07 cm (0.03 inch), still more preferably about 0,063 cm (0.025 inch).

In the embodiment shown in FIG. 3, splines 44 are included in bore 8 of anchor 10 for engaging with mounting fastener 4. Mounting fastener threading 5 taps mating threads 45 into splines 44 so that mounting fastener 4 is threadingly engaged with splines 44, and hence with anchor 10. Splines 44 also add structural support to anchor 10 so that body 12 of anchor 10 can withstand higher torsion forces when driven through drywall 1 and support member 2.

The effective inner diameter of bore 8 with splines 44 should be smaller than the outside diameter, or crest diameter of mounting fastener 4, but not as small as the root diameter of mounting fastener 4, so that splines 44 are tapped by mounting fastener 4 to form mating threads 45. preferably, the height of splines 44 from the interior of wall 38 is selected so that the effective inner diameter of bore 8 is small enough so that the threading of a #6 threaded mounting fastener 4, with an outer diameter of about 0,345 cm (0.136 inch) can tap splines 44, and so that the inner diameter of wall 38 is large enough so that the threading of a # 8 threaded mounting fastener 4, having an outer diameter of about 0,416 cm (0.164 inch), only taps splines 44 and does not tap wall 38. In a preferred embodiment, bore 8 has an inner diameter at wall 38 of between about 0,432 cm (0.17 inch) and about 0,53 cm (0.21 inch), preferably between about 0,457 cm (0.18 inch) and about 0,5 cm (0.2 inch), still more preferably about 0,482 cm (0.19 inch) and splines 44 have a height of between about 0,038 cm (0.015 inch) and about 0,114 cm (0.045 inch), preferably between about 0,063 cm (0.025 inch) and about 0,089 cm (0.35 inch), still more preferably about 0,076 cm (.03 inch), so that the effective inner diameter of bore 8 at splines 44 is between about 0,28 cm (0.11 inch) and about 0,41 cm (0.16 inch), preferably between about 0,30 cm (0.12 inch) and about 0,368 cm (0.145 inch), still more preferably about 0,33 cm (0.13 inch).

Anchor 10 is made from a material that is strong enough to withstand the torsional forces of driving anchor 10 into drywall 1 and support member 2 under normal conditions, yet malleable enough to be tapped by threaded mounting fastener 4. The material of anchor 10 is preferably pierceable or breakable by mounting fastener 4 so that tip 36 of mounting fastener 4 will be able to extend past drilling tip 16 of anchor 10. Also, anchor 10 should be made from a material that can easily and inexpensively be formed into the specific geometry of anchor 10. Anchor 10 can be made from a metal or metal alloy that can be die cast into the shape of anchor 10, such as tin based alloys, aluminum based alloys, magnesium based alloys, copper, bronze or brass alloys, and zinc based alloys. In one embodiment, anchor 10 is made from a zinc alloy, such as Zamac 1.

Anchor 10 can also be made from plastic or other polymeric materials, e.g. an engineered plastic such as Delron, nylon, and nylon with fillers, such as glass filled nylon. However, anchor 10 should be made to be strong enough to withstand the torsional forces of driving anchor 10 into drywall 1 and support member 2.

### DISTAL PORTION

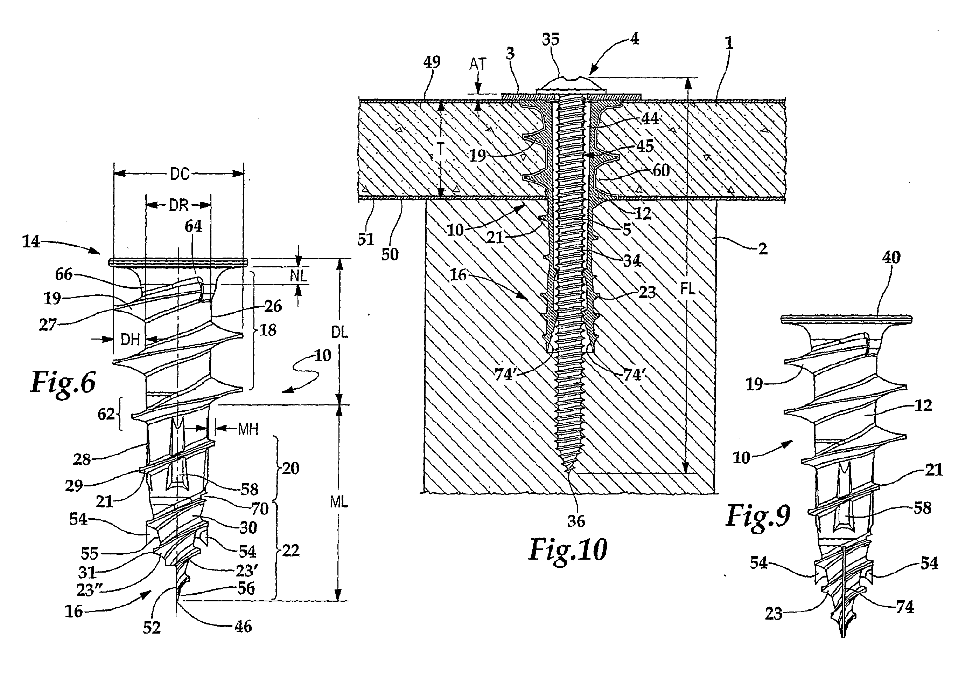

Turning back to FIGS. 1-4, distal portion 22 allows anchor 10 to drill through drywall 1 and support member 2 as it may be driven manually by a user so that a separate pre-drilling step is not needed. Distal portion 22 includes a drilling tip 16, and in a preferred embodiment, shown in FIG. 2, drilling tip 16 is generally conical in shape and is coaxial with body 12 so that drilling tip 16 comes to point 46 at body axis 6. Preferably, drilling tip 16 includes a sharp point 46 to guidedly and quickly engage surface 48 of drywall 1 and the front surface of support member 2. Drilling tip 16 can also include a flat 52, as shown in FIG. 6, on the lower portion of drilling tip 16 to aid initial engagement of anchor 10 with drywall 1 and with support member 2.

Distal portion 22 includes a threaded exterior having drilling threading 23 disposed on distal portion 22 for engaging drywall 1 and support member 2. Drilling threading 23 includes a root 30 and a crest 31 having a crest diameter TC substantially smaller than drywall gripping threading crest diameter DC, and a thread height TH substantially smaller than drywall gripping thread height DH. Drilling thread height TH is also small enough so that the installation torque into support member 2 may be achieved manually by the typical user so that anchor 10 can be driven into support member 2. Threading 23 can also include a radius of curvature between the base of the thread 23 and root 30, best seen in FIG. 3, to prevent the formation of stress concentrations at base of thread 23.

Continuing with FIGS. 2 and 3, drilling threading root 30 tapers from intermediate portion 20 toward drilling tip 16 so that the cross sectional area of drilling threading root 30 proximate drilling tip 16 is reduced with respect to the cross sectional area at intermediate portion 20. Thread height TH of drilling threading 23 remains substantially constant along the length of distal portion 22. However, because root 30 is relatively small, particularly at drilling tip 16, thread height TH can be larger, for example larger than thread height MH of member gripping threading 21, because the small root 30 allows a larger thread height without an overly large crest diameter TC.

Distal portion threading 23 and intermediate portion threading 21 engage drywall 1 and drive anchor 10 through drywall 1. If anchor 10 is driven into a location wherein at support member 2 is located behind drywall 1, drilling tip 16 hits support member 2, and if support member 2 is relatively hard with respect to drywall 1, e.g. a wood support stud, then anchor 10 typically spins within drywall 1 without axially advancing into support member 10, referred to herein as stalling. As anchor 10 stalls, distal portion threading 23 and intermediate portion threading 21 drill a hole of a predetermined size in drywall 1 while drilling tip 16 drills into support member 2.
Eventually drilling tip 16 drills to a depth into support member 2, usually between about 0,32 cm (1/8 inch) and about 0,63 cm (1 /4 inch), that allows distal portion threading 23 to engage support member 2 and begin pulling anchor 10 through support member 2 and drywall 1 so that drywall gripping threading 19 can engage drywall 1.

It has been found that the size of the hole drilled into drywall 1 by intermediate portion threading 21 is important in the grip created between drywall and drywall gripping threading 19, particularly if anchor 10 is driven into drywall only. It has been found that for drywall threading having a crest diameter of about 1,27 cm (1/2 inch), it is ideal for the hole drilled in the drywall to have a diameter of about 0,63 cm (1/4 inch). Therefore, distal portion 22 is designed to drill out a hole in drywall 1 that generally maximizes to the extend pratically attainable the pullout strength of anchor 10 in drywall 1.

Continuing with FIG. 2, distal portion 22 can include at least one wing 54 that protrudes radially outwardly from distal portion 22 to ream out drywall 1 to form a hole having a predetermined diameter selected to maximize pullout strength in drywall 1, particularly when anchor 10 is driven into drywall 1 only, with no support member 2 behind the installation location. Preferably, wing 54 extends to a distance from axis 6 that is approximately equal to the root radius of proximal portion 18 near flange 40, wherein the root radius is half of the root diameter DR. Wings 54 are designed to break away when they hit support member 2 so that wings 54 do not ream out support member 2, but only ream out drywall 1.

In the embodiment shown in FIG. 2, distal portion 22 includes a pair of wings 54 that protrude radially outwardly from distal portion 22. Wings 54 are evenly spaced around the perimeter of distal portion 22 so each of a pair of wings 54 are about 180° apart. Wings 54 protrude radially outwardly so that a width WW across wings 54 is approximately equal to root diameter DR of proximal portion 18 near flange 40. It is preferred that the hole reamed out by wings 54 be approximately equal to root diameter DR so that wings 54 ream out only as much drywall 1 as is necessary, leaving behind a maximum amount of drywall 1 for engagement with drywall gripping threading 19.

If drilling tip 16 hits support member 2, there is a momentary stall as drilling tip 16 drills into support member 2, as described above, so that the threading on anchor 10 begins to strip away a portion of drywall 1. For this reason, it is important that drilling threading 23 engage support member 2 and that distal portion 22 drill into support member 2 quickly so that anchor 10 does not excessively strip out drywall 1 before being driven forward, avoiding the creation of scarring on the surface 48 of drywall 1. Drilling threading 23 extends to an axial position that is as close to drilling tip 16 as possible so that drilling threading 23 can more quickly engage with support member 2. In a preferred embodiment, drilling treading 23 extends substantially to said drilling tip 16 so that a lead 56 of trilling threading 23, shown in FIGS. 1, 2, and 5, is axially spaced from drill tip point 46 by between about 0 cm (0 inches), wherein drilling threading 23 extends substantially all the way to drilling tip 16, and about 0,152 cm (0,06 inches). Ideally, it is preferred that drilling threading 23 extends all the way to drilling tip 16, i.e, no space between tip point 46 and lead 56, however, it has been found that for a drilling tip that comes to a point, wherein the root essentially has a diameter of 0 cm (0 inches), the drilling threading actually becomes axial, which can make it difficult for the drilling threading to engage support member 2. For this reason, lead 56 of drilling threading 23 can be spaced slightly from drilling tip 16, e.g. at about 0,05 cm (0.02 inch) .

Anchor 10 should have enough structural strength to withstand high torsional forces without collapsing, particularly at drilling tip 16. The potential for anchor 10 to collapse is exacerbated by thin wall 38 described above, which provide little support against the high torsion forces experienced by anchor 10 when driving into support member 2. For this reason, anchor 10, and especially drilling tip 16, includes strengthening elements. Drilling threading 23 provides a structural strengthening effect on drilling tip 16. This structural strengthening is important because of the high torsional forces associated with driving anchor 10 into support member 2, especially since anchor wall 38 is thin and do not provide much structural support by itself.

Continuing with FIGS. 1 and 2, external threading 23 of distal portion 22 can include two generally helical threads 23', 23" arranged in a double helix. The double helix configuration of threads 23', 23" provides added support around distal portion 22 to help prevent distal portion 22 from collapsing due to the torsional forces of driving anchor 10 into support member 2. Double helix threads 23', 23" also provide balanced driving into support member 2 and faster engagement of drilling tip 16 with support member 2. In addition, the double lead threads 23', 23" extend to an axial position proximate to drilling tip 16 so that anchor 10 can quickly engage and drill into support member 2..

Preferably, each thread 23', 23" of the double helix has substantially the same pitch P so that one of the threads 23', 23" does not overtake the other. Preferably, second thread 23 " is spaced axially from first thread 23' by approximately half the pitch P of threads 23', .2 3" , i.e. about 0,25 cm (0.1 inch) for a pitch P of about 0,5 cm (0.2 inch), so that at every axial position along distal portion 22, there is a thread 23', 23" on either side providing structural support. Preferably, threads 23', 23" of double helix have substantially the same thread height TH.

First thread 23' of the double helix may continue as a thread 21 on intermediate portion 20 while second thread 23" is only present on distal portion 22. Both threads 23', 23" can also continue on in a double helix on intermediate portion 20 (not shown) to provide structural support for intermediate portion 20 as well as distal portion 22. If second thread 23" is extended onto intermediate portion 20, it provides improved grip with support member 2.

### INTERMEDIATE PORTION

As described above, it is desirable to allow mounting fastener tip 36 to extend past drilling tip 16 of anchor 10 so that a user can use mounting fasteners 4 of different lengths. However, unless anchor 10 adequately grips support member 2 when mounting fastener 4 begins to drive into support member 2, the rotation of mounting fastener 4 will cause mounting fastener threading 5 to back anchor 10 out of drywall 1, known as "jacking," which can cause complete failure of anchor 10 and can cause drywall gripping threading 19 to scar drywall 1. Resistance to jacking is accomplished by a positive engagement between anchor 10 and support member 2 via member gripping threading 21 and drilling threading 23 when mounting fastener 4 is driven into support member 2. If mounting fastener 4 does not pierce or break through anchor 10, the member gripping strength of intermediate portion 20 is not as critical. However, it is still desirable that anchor 10 adequately engage support member 2 because engagement with support member 2 is the main source of the holding value of anchor 10.

Returning to FIGS. 2 and 3, member gripping threading 21 is disposed on intermediate portion 20 and includes a root 28 and a crest 29 having a crest diameter MC substantially smaller than drywall gripping threading crest diameter DC. In the embodiment shown in FIG. 2, root 28 of intermediate portion 20 is generally frustoconical so that root 28 tapers slightly toward distal portion 22 so that the torque required to install anchor 10 will be minimized, particularly in wood support members, because it allows the root diameter MR and crest diameter MC of intermediate portion 20 to be smaller. In one embodiment, member gripping threading root 28 tapers at an angle of between about ½ degree and about 4 degrees, preferably about 2 ¼ degree.

It is preferred that the largest crest diameter MC of intermediate portion 20 be selected to maximize the gripping between drywall gripping threading 19 and drywall 1, particularly when anchor 10 is to be installed in drywall only. For example, for an anchor 10 have a drywall gripping threading crest diameter DC of about 1,27 cm (1/2 inch), it is desired that the largest member gripping crest diameter MC be about 0,63 cm (1 /4 inch) or smaller.

In contrast to drywall gripping treading 19, described below, member gripping threading 21 has a thread height MH that is substantially smaller than the thread height DH of drywall gripping threading 19. The crest diameter MC of intermediate portion 20 is also substantially smaller than the crest diameter DC of proximal portion 18 so that the required installation torque in a support member 2, such as a wood stud, is not excessive. The crest diameter MC and thread height MH of member gripping threading 21 is preferably selected so that it is small enough that it does not scar or tear drywall 1 when anchor 10 stalls when drilling into support member 2, described above, and so that member gripping threading 21 does not engage drywall 1 during stalling, which would jack drywall 1 away from support member 2.

Although larger thread heights MH, TH of intermediate portion 20 and distal portion 22 would result in higher pullout strength within support member 2, it would also greatly increase the torque required to drive anchor 10 into wood or other support member materials, making it difficult for a user to install anchor 10, particularly with a hand-driven screwdriver. Therefore, thread height MH, TH should be chosen to allow for an acceptable torque as intermediate portion 20 is driven into support member 2.

In the embodiment shown in FIG. 1, threading 21 of intermediate portion 20 is one generally helical thread 21 is a continuation of drilling thread 23' and extends on to drywall engaging thread 19 (described below). External threading 21 of intermediate portion 20 can also be a double helix similar to the double helix shown in distal portion 22 to provide added structural support on intermediate portion 20. Intermediate threading 21 can also have a radius of curvature between the base of thread 21 and root 28 to prevent the formation of stress concentration along the base of thread 21.

The combined length ML of intermediate portion 20 and distal portion 22 is preferably larger than the thickness T of drywall 1 so that when anchor 10 stalls before beginning to drill into support member 2, the lager crested threading 19 of proximal portion 18 (described below) is not engaged with drywall 1, which would tend to strip out drywall 1 and leave a large scar on front surface of drywall 1. The length ML should also be long enough so that distal portion 22 completes its drilling of drywall 1 before drywall gripping threading 19 begins to engage drywall 1, particularly when anchor 10 is driven into drywall only. This is preferred because drilling into a material tends axially advance through the material substantially slower than driving through the material with threading. For example, anchor 10 is driven axially through drywall 1 by drywall gripping threading 19 much faster than anchor 10 can drill into drywall 1. If the drilling step is not completed before drywall gripping threading 19 begins to engage drywall 1, than it is likely that drywall gripping threading 19 will strip out drywall 1 rather than drive anchor 10 through it. Additionally, it is important to balance the length ML of intermediate portion 20 and distal portion 22 and the installation torque required to drive anchor 10, particularly into support member 2.

Continuing with the embodiment shown in FIGS. 1 and 2, intermediate portion 20 includes ribs 58 for structural support. Preferably ribs 58 are axially extending and protrude radially outwardly slightly from root 28 of intermediate portion 20. Ribs 58 can also be placed on proximal portion 18 or distal portion 22 to provide more structural support along anchor 10 when drilling and threading into support member 2.

In a preferred embodiment, anchor 10 includes a double helix of drilling threads 23', 23" and axial ribs 5 8, which cooperate to form a cage or lattice of support around distal portion 22 and intermediate portion 20 to help prevent anchor 10 from collapsing due to the high torsional forces of driving anchor 10 into support member 2. Splines 44 in bore 8, shown in FIG. 3, also add strength to the cage or lattice support structure of anchor 10.

### PROXIMAL PORTION

Returning to FIGS. 1-4, proximal portion 18 includes a threaded exterior for engagement with drywall 1 when anchor 10 is installed so that the load of article 3 will be supported by drywall 1, particularly if anchor 10 is driven into drywall only. Drywall gripping threading 19 taps a mating thread 60 in drywall 1 so that an engagement between drywall gripping threading 19 and drywall 1 is accomplished. The threaded exterior includes threading 19 disposed on proximal portion 18 having a crest 27 with a crest diameter DC and a root 26 having a root diameter DR. Drywall gripping threading 19 is high threading wherein the distance between crest 27 and root 26, or the thread height DH, is large relative to member gripping threading 21 and drilling threading 23. High drywall gripping threading 19 helps to maximize the surface area of drywall gripping threading 19 encountered by drywall 1, increasing the pullout strength. The thread height DH of drywall gripping threading 19 is substantially larger than the thread heights MH, TH of member gripping threading 21 and drilling threading 23, which provides for higher pullout strength in drywall 1. The diameter DC of drywall gripping threading crest 27 can remain essentially the same along the entire length of proximal portion 18. In one embodiment, the diameter DC of crest 27 is about twice the diameter DR of root 26.

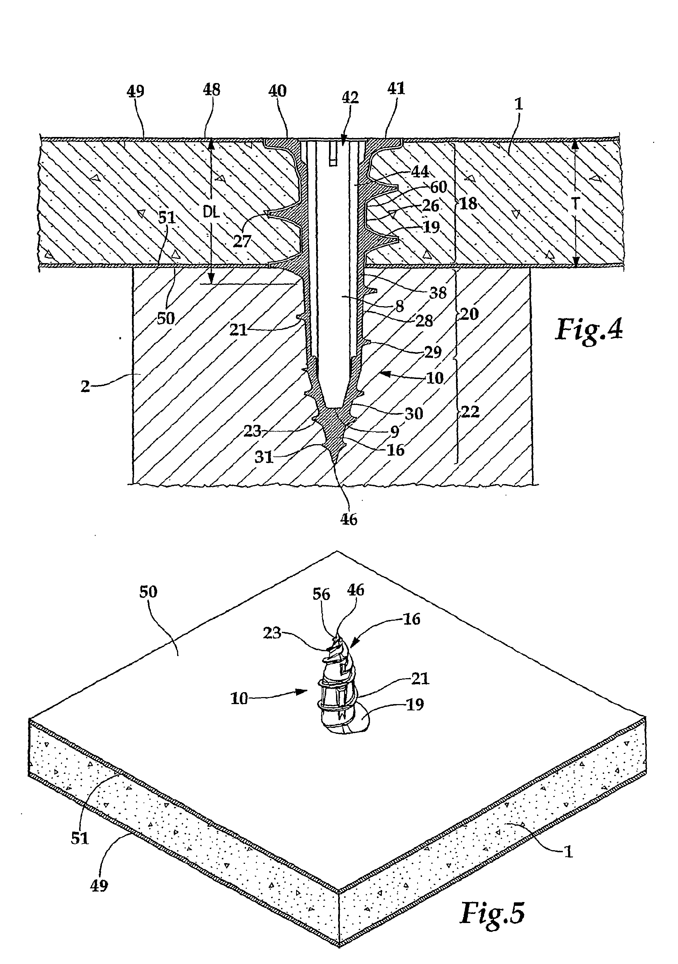

Turning to FIG. 5, preferably approximately ¾ of a turn of drywall gripping threading 19 is engaged behind drywall 1 so that drywall engaging threading engages the paper 51 on the rear surface 50 of drywall 1. Engaging paper 51 on drywall rear surface 50 is particularly important when driving anchor 10 into drywall only, because it has been found that engagement with paper 51 provides a substantial portion of the grip between anchor 10 and drywall 1. Drywall gripping threading 19 is not intended to be driven into support member 2 because the high drywall gripping threading 19 would require a very high torque to drive anchor 10 into support member 2.

Returning to FIGS. 2 and 3, root 26 of proximal portion 18 can be tapered toward intermediate portion 20 so that root 26 is generally frustoconical, and so that the diameter of root 26 at the top of proximal portion 18 is larger than the diameter of root 26 at the bottom of proximal portion 18. In the embodiment shown in FIG. 2, tapered root 26 of proximal portion 18 and tapered root 28 of intermediate portion 20 are generally continuous and taper at approximately the same angle so that roots 26, 28 lie generally along the same frustocone giving anchor 10 a ballistic or bullet type shape.

In the embodiment shown in FIG. 1, exterior threading 19 of proximal portion 18 is one thread 19 that is a continuation of member gripping thread 21, except that drywall gripping threading 19 has a substantially larger crest diameter DC and a substantially larger thread height DH than the crest diameter MD and thread height MH of intermediate portion 20, see FIGS. 2 and 3. In one embodiment, crest diameter DC of proximal portion 18 is about twice the crest diameter MC of intermediate portion 20.

Preferably, there is a transition zone 62 between intermediate portion 20 and proximal portion 18 wherein the crest diameter and thread height enlarge from member gripping thread 21 to drywall gripping thread 19. In one embodiment, transition zone 62 extends for about 3/4 of a thread turn. Drywall gripping threading 19 is preferably generally helical, as shown in FIG. 1. Drywall gripping threading 19 can also be a double helix of two threads, as described above, wherein one of the threads of the double helix can be a fine thread having a substantially smaller thread height than the thread height DH of drywall gripping thread 19. This second thread would provide added strength to anchor 10. Drywall gripping thread 19 can also include a radius of curvature between the base of the thread 19 and root 26 to minimize stress concentration at the base of drywall thread 19.

. Turning back to FIGS. 2 and 4, the upper end of drywall gripping threading 19 is spaced from flange 40 to form a neck 64 between flange 40 and drywall gripping threading 19. Neck 64 allows upper surface 41 of flange 40 to seat at or below the level of drywall surface 48, as shown in FIG. 4, because the discontinuation of drywall gripping threading 19 at neck 64 before reaching flange 40 creates a space in the threads 60 formed in drywall 1 which allows compression of adjacent material by flange 40. Also, neck 64 ensures that drywall gripping threading 19 is spaced away from paper 49 on drywall surface 48, so that drywall gripping threading 19 does not engage the paper 49 and twist it, creating an undesirable appearance of drywall surface 48. Neck 64 can have a length NL of between about 0,076 cm (0.03 inch) and about 0,254 cm (0.1 inch), preferably about 0,178 cm (0.07 inch).

The length DL of proximal portion 18, including flange 40, is preferably slightly larger than the thickness T of drywall 1, as shown in FIG. 4, preferably so that there is a portion of drywall gripping threading 19 behind drywall rear surface 50 to engage rear surface paper 51. It is important to select the length DL of proximal portion 18 carefully, balancing the length of drywall gripping threading 19 engaging paper 51 on rear surface 50 of drywall 1 with the torque required to drive that length of drywall gripping threading 19 into a support member 2, if anchor 10 is driven into a location where a support member 2 is located. In addition, it is desirable that anchor 10 be usable with different thicknesses of drywall 1, so it is important to remember that a certain length DL of proximal portion 18 may allow threading 19 to engage rear surface paper 51 in one thickness of drywall, but may be too short to engage rear surface page 51 in a thicker drywall, or conversely, proximal portion 18 may be too long so that too much of drywall gripping threading 19 must be driven into a support member for a thinner drywall, resulting in a higher required installation torque.

The pitch P of drywall gripping threading 19 is chosen so that there preferably is at least one full turn of drywall gripping threading 19 in drywall 1, and preferably between about 1 ¾ turns and about 2 ¼ turns, still more preferably about 2 full turns of drywall gripping threading 19 embedded in drywall 1. In one embodiment, for drywall 1 having a thickness of 1, 27 cm (1/2 inch) or 1, 58 cm (5/8 inch), the pitch P of drywall gripping threading 19 is between about 0,317 cm (1 /8 inch) and about 0,76 cm (0,3 inch), preferably about 0,5 cm (0.2 inch). Preferably, the pitch of drywall gripping thread 19 is generally equal to the pitches of member gripping threading 21 and drilling thread 23. In one embodiment (not shown) the pitch of drywall gripping threading 19 proximate transition zone 62 has a larger pitch than the remaining thread 19 proximate flared end 14. When this larger pitched threading engages drywall 1, it pulls anchor 10 into drywall relatively fast, helping to counteract any jacking that may tend to occur.

### FLARED END

Turning to FIGS. 1-4, flange 40 is located at flared end 14 of anchor 10 and includes an enlarged diameter FD with respect to drywall gripping threading root 26 to allow flange 40 to grip paper 49 on drywall front surface 48. In one embodiment, flange 40 has a flange diameter FD of between about 1,14 cm (0.45 inch) and about 1,52 cm( 0.6 inch), preferably about 1,31 cm (0.515 inch). Flange 40 also includes torque transmitting surfaces 15 so that anchor 10 can be rotated with a driver by the user. Flange 40 can include a recess 42 for receiving the tip of a driver 43, see FIG. 8, wherein recess 42 is configured for a particular kind of driver. In Recess 42 is a Phillips-type recess for receiving the tip of a Phillips-type driver.

Recess 42 has an effective diameter that is larger than the inner diameter of bore 8 to accommodate driver 43 so that anchor wall 38 is thinner at recess 42 than at other axial positions along anchor 10. Because all the torque that is experienced by anchor 10 tends to be concentrated at recess 42, flared end 14 can break off before anchor 10 has been fully driven, particularly if anchor 10 is being driven into a support member 2 because of the high torques required to drive anchor 10 into support member 2. In one embodiment, shown in FIG. 3, anchor 10 includes a widened wall 39 at recess 42 to form a hump 66 for reinforcing recess 42. Widened wall 39 of hump 66 extends along the entire axial length of recess 42 to fully support recess 42 during driving of anchor 10.

The hardness and density of wood in a wood support member 2 can be highly variable. The variation in hardness and density results in a variation in the installation torque required to seat flange 40 within drywall 1 so that trailing surface 41 of flange 40 is flush or below drywall surface 48. Further, the torque required to drive anchor 10 increases significantly when seating flange 40 in drywall compared to merely driving anchor 10 through drywall 1 and support member 2. In some cases, the seating torque increase is high enough that a user must apply such a large torque that the user tends to provide too much torque, and instead of merely seating flange 40, the user over-rotates anchor 10 and strips out some of drywall 1. When the required installation torque becomes too high (i.e. larger than 50 in-lbs), it may become difficult or impossible to seat flange 40 with normal hand tools.

To counteract this seating problem, flange 40 of anchor 10 can be modified to reduce the torque load required for the user to provide. In one embodiment (not shown), anchor 10 does not include a flange, or includes a flange having a diameter that is smaller than the crest diameter DC of drywall gripping threading 19, so that the required seating torque is substantially reduced. This makes it easier for the user to seat the flange, or the trailing end of anchor 10, and reduces the likelihood of over-rotation because the torque ramp up is significantly reduced or eliminated.

### BREAK-OFF FLANGE

Anchor 10 may include a break off flange 40', shown in FIG. 8. Anchor 10 includes a break off zone 68 of weakening elements, such as scoring, notches, slits, or small holes to cause flange 40' to break off at a predetermined torque so that once driver 43 applies the predetermined torque to anchor 10, flange 40' breaks off from anchor body 12 so that the user does not have to seat flange 40'. Break off zone 68 is located at an axial position on anchor 10 so that when flange 40' breaks off, the remaining unbroken part of anchor body 12 is at or below the level of drywall surface 48, so that anchor 10 is still functional and able to receive mounting fastener 4. The predetermined break-off torque of flange 40' should be a predetermined amount more than the torque normally required to drive anchor 10 substantially its full length into drywall 1 and support member 2, so that upon breaking off of flange 40', the remaining outermost portion of anchor 10 should be flush or slightly countersunk with respect to drywall surface 48, thereby providing for a nice finished appearance with or without further finishing, depending on the application.

Many of the features of the anchor of the present invention have been described above. As examples of the present invention, several embodiments are discussed below.

### BREAK-OFF TIP EMBODIMENT

Referring to FIGS. 1-4, and 7, one embodiment of anchor 10 includes at least one of intermediate portion 20 and distal portion 22 being frangible so that mounting fastener 4 can break off a portion 16' of body 12, see FIG. 7, so that mounting fastener tip 36 can extend beyond the original position of drilling tip 16 (see FIG. 4).

The break-off tip embodiment of anchor 10 is designed so that when a mounting fastener 4 that is longer than anchor 10 is used, mounting fastener tip 36 will break off, or break through, drilling tip 16 of anchor 10 so that mounting fastener tip 36 will be able to extend farther than anchor body 12, as shown in FIG. 7, so that the user of anchor 10 and mounting fastener 4 can use an extra long mounting fastener 4 for varying thicknesses of articles 3 without having to worry if anchor 10 is long enough to support mounting fastener 4. Alternatively, a shorter mounting fastener 4 can be used so that mounting fastener tip 36 does not pierce through anchor body 12, but rather remains retained within bore 8.

Turning to FIGS. 4 and 7, after anchor 10 is installed, mounting fastener 4 is driven into bore 8 until mounting fastener tip 36 bears against the end 9 of interior bore 8, which is located radially within distal portion 22. As the user continues to drive mounting fastener 4, the bearing force on distal portion 22 becomes large enough to break off a portion of distal portion 22 from the rest of anchor body 12. In the embodiment shown in FIG. 7, drilling tip 16' breaks off around the perimeter of distal portion 22 and remains engaged with mounting fastener 4 so that drilling tip 16' is forced deeper into support member by mounting fastener 4.

Continuing with the embodiment in FIGS. 1-3, distal portion 22 includes a weakening element in the structure of anchor body 12 to help ensure that drilling tip 16 breaks off at a desired location. An example of a weakening element is a break in thread 23, such as a longitudinal or lateral notch 70, at the desired axial break off location. Because threading 23 provides structural support, notch 70 in thread 23 provides a small area of structural weakness in anchor body 12 that cannot withstand the tensile forces created by mounting fastener 4 bearing against bore end 9. Notch 70 also helps to prevent threading 23 from unwinding around mounting fastener 4, which helps keep anchor 10 from being unscrewed from drywall 1 if mounting fastener 4 is removed from anchor 10. In one embodiment, notch 70 has a width that is about 0, 43 cm (0.17 inch), and a shallow depth into the thread of about 0,076 cm (0.03 inch).

Turning to FIG. 3, another weakening element includes creating a sharp step 72 in the diameter of bore 8 at the desired axial break off location. Step 72 allows a concentration of stress to form, which increases the likelihood that drilling tip 16 will break off at step 72. Other weakening elements include grooves or small holes (not shown) in anchor body 12 at the desired break off location of drilling tip 16, such as an internal groove within the generally conical area at bore end 9.

In a split tip embodiment, shown in FIGS. 9 and 10, distal portion 22 includes regions of weakness, such as a set of evenly spaced axially extending slits 74, extending axially toward drilling tip 16. The regions of weakness provided a weakening in wall 38 of distal portion 22, allowing mounting fastener 4 to split distal portion 22 generally along slits 74' as mounting fastener tip 36 bears against bore end 9, so that drilling tip 16 is pushed radially outwardly by mounting fastener 4, as shown in FIG. 10. The split portions of drilling tip 16 remain attached anchor body 12 and distal portion threading 23 remains engaged with support member 2 to provide a stronger grip between anchor 10 and support member 2.

Turning back to FIGS. 2 and 3, the break-off tip embodiment of anchor 10 includes a pair of wings 54 protruding from distal portion 22. Each wing 54 is connected to distal portion 22 so that a portion of each wing 54 is connected to a thread 23', 23", and a portion of each wing 54 is mounted to drilling threading root 30. Wings 54 of anchor 10 protrude radially outwardly, but also extend axially downward slightly and include points 55, which point in generally the same direction as drill point 46, for scoring drywall paper 49 to avoid tearing of paper 49. In one embodiment, wings 54 protrude radially outwardly from distal portion 22 to a distance from axis 6 of between about 0,25 cm (0.1 inch) and about 0,355 cm (0,14 inch) , preferably about 0,28 cm (0,11 inch), and wings 54 have an axial length of between about 0,152 cm (0,06 inch) and about 0,228 cm (0.09 inch) . In one embodiment, a pair of wings 54 has a width WW across the pair of wings 54 of between about 0,5 cm (0.2 inch) and about 0,711 cm (0.28 inch), preferably about 0,558 cm (0,22 inch).

Most drywall 1 currently in use is either 1,27 cm (1/2 inch) or 1,59 cm (5/8 inch) thick, therefore it is preferred that the length DL of proximal portion 18, including flange 40, be between about 1,11 cm (7/16 inch) and about 1,9 cm (3/4 inch), preferably between about 1, 27 cm (1/2 inch) and about 1,74 cm (11/16 inch), still more preferably about 1,59 cm (5/8 inch). The length DL of proximal portion 18 and flange 40 is approximately equal to the length ML of intermediate portion 20 and distal portion 22.

In one embodiment, proximal portion 18 has a crest diameter DC of between about 1,14 cm (0.45 inch) and about 1,333 cm (0.525 inch), preferably about 1,22 cm (0.48 inch), a root diameter DR near flange 40 of between about 0,61 cm (0,24 inch) and about 0,76 cm (0.3 inch), preferably about 0,635 cm (1/4 inch), a thread height TH of between about 0,19 cm (0.075 inch) and about 0,355 cm (0.14 inch), preferably about 0,317 cm (1 /8 inch), and root 26 of proximal portion 18 tapers toward intermediate portion 20 at an angle with respect to axis 6 of between about ½ degree and about 3 degrees, preferably about 1 degree on each side of proximal portion 18.

Intermediate portion 20 of anchor 10 can have a crest diameter MC near proximal portion 18 of between about 0,66 cm (0,26 inch) and about 0,889 cm (0.35 inch), preferably about 0,711 cm (0.28 inch), a root diameter MR near proximal portion 18 of between about 0,5 cm (0.2 inch) and about 0,835 cm (1/4 inch), preferably about 0,55B cm (0.22 inch), a thread height MH of between about 0,025 cm (0.01 inch) and about 0,19 cm (0.075 inch), preferably about 0,089 cm (0.035 inch), and root 28 of intermediate portion 20 tapers toward distal portion 22 at an angle with respect to axis 6 of between about 1 degree and about 4 degrees, preferably about 2 ¼ degrees. In one embodiment, shown in FIG.2, the angle which proximal portion root 26 tapers is substantially equal to the angle which intermediate portion root 28 tapers.

Distal portion 22 of anchor 10 can have a maximum crest diameter TC of between about 0,584 cm (0.23 inch) and about 0,66 cm (0.26 inch), preferably about 0,609 cm (0.24 inch), a maximum root diameter TR of between about 0,457 cm (0.18 inch) and about 0,558 cm (0.22 inch), preferably about 0,5 cm (0.2 inch), a thread height TH of between about 0, 05 cm (0.02 inch) and about 0,178 cm (0.07 inch), preferably about 0,089 cm (0.035 inch), and drilling threading root 30 tapers toward drilling tip 16 at an angle with respect to axis 6 of between about 10 degrees and about 20 degrees, preferably about 15 degrees. The total length ML of intermediate portion 20 and distal portion 22 can be between about 1,27 cm (1/2 inch) and about 2,22 cm (7/8 inch), preferably about 1,59 cm (5/8 inch).

Anchor 10 includes axially extending supporting ribs 58 mounted to root 28. In one embodiment, ribs 58 protrude radially outwardly from root 28 more at the driving end than at the trailing end of ribs 58, as shown in FIG. 2. In one embodiment, ribs 58 have a length RL of between about 0,5 cm (0.2 inch) and about 0,91 cm (0.36 inch), preferably about 0,711 cm (0.28 inch) and a width RW of between about 0,101 cm (0.04 inch) and about 0,254 cm (0.1 inch), preferably about 0,203 cm (0.08 inch), and ribs 58 protrude from root 28 by about 0,0381 cm (0.015 inch).

### CAN-OPENER EMBODIMENT

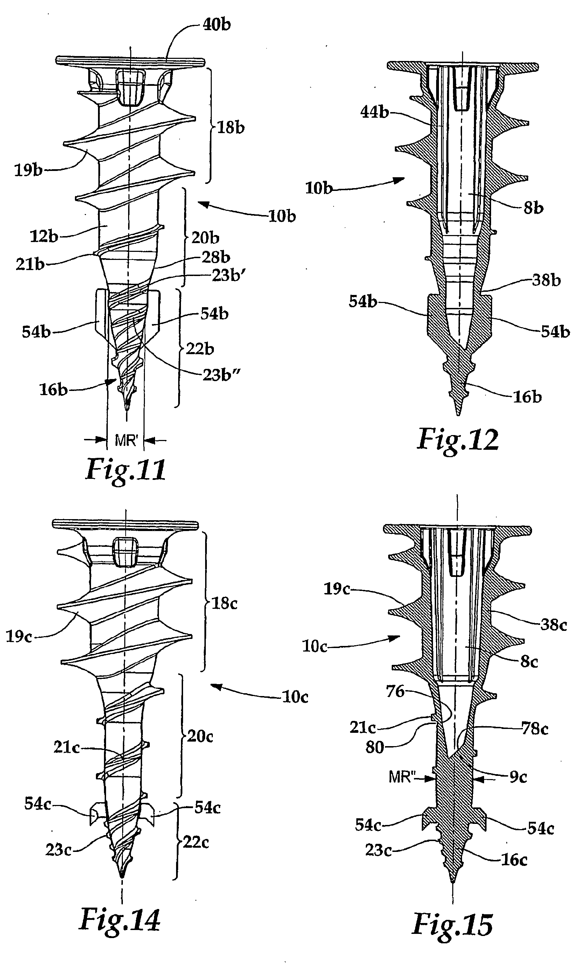

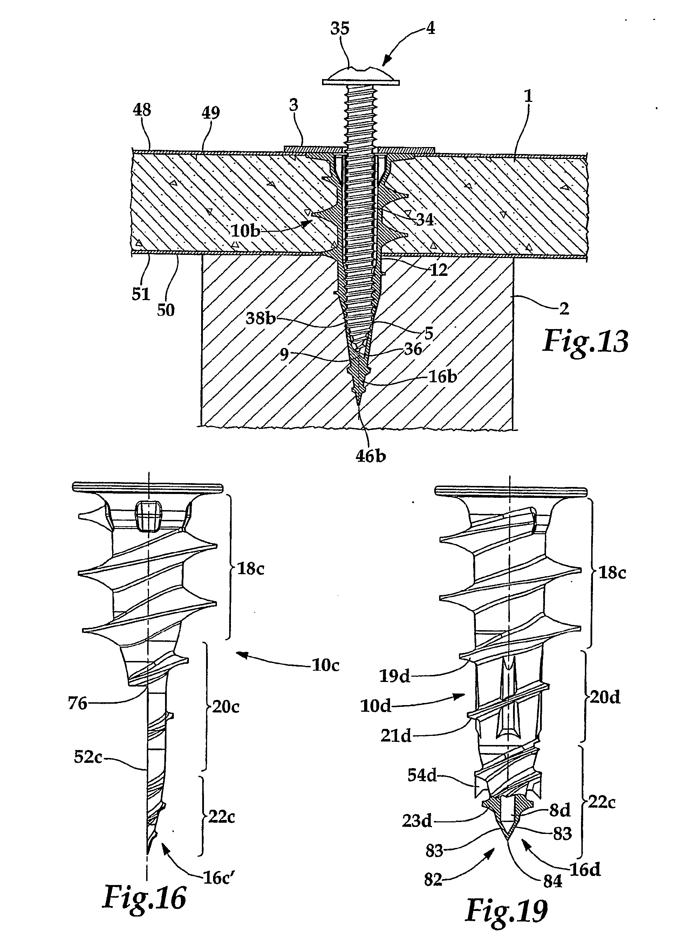

Turning to FIGS. 11-13, a can-opener embodiment of anchor 10b is shown wherein the outer diameter of at least one of intermediate portion 20b and distal portion 22b is smaller than the crest diameter, or outer diameter, of mounting fastener 4, so that mounting fastener threads 5 can penetrate through the at least one of intermediate portion 20 and distal portion 22 so that mounting fastener tip 36 can extend beyond the original position of drilling tip 16b. Wall 38b between bore 8 and the exterior of distal portion 22b or intermediate portion 20b near distal portion 22b is thin enough, and is close enough to axis 6, that mounting fastener threading 5 is able to slice through wall 38b, as shown in FIG. 13, shearing around the perimeter of anchor body 12b so that drilling tip 16b is no longer connected to the rest of anchor body 12b. Drilling tip 16b becomes separated from the remainder of anchor body 12b and remains engaged with mounting fastener tip 36, similar to tip 16' shown in FIG. 7.

Because wall 38b is positioned closer to axis 6 to allow mounting fastener threading 5 to slice through wall 38b, the corresponding root diameter MR' of intermediate portion 20b is also smaller, which requires a smaller torque to install fastener, and which requires less material to manufacture.

Anchor 10b can also have a set of wings 54b similar to wings 54 of anchor 10 of the break-off tip embodiment. In one embodiment, wings 54b extend axially, but do not have points to score the surface of drywall 1.

Proximal portion 18b of the can-opener embodiment of anchor 10b has approximately the same dimensions as those for the break-off tip embodiment of anchor 10, described above. Intermediate portion 20b of anchor 10b is slightly different than intermediate portion 20 of anchor 10, shown in FIG. 2. A portion of intermediate portion root 28b tapers toward distal portion 22b at an angle that is noticeably larger than the angle which proximal portion root 26b tapers so that member gripping threading root 28b becomes smaller than member gripping threading root 28 of the break-off tip embodiment. The smaller root of member gripping threading root 28b allows mounting fastener threading 5 to slice through wall 38b, cutting off a portion of drilling tip 16b from the rest of anchor body 12b. In one embodiment, intermediate portion 20 has a root diameter MR' that is between about 0,406 cm (0.16 inch) and about 0,558 cm (0.22 inch) preferably about 0,5 cm (0.2 inch). Distal portion 22b of anchor 10b also has a maximum root diameter and crest diameter that is smaller than those of anchor 10 of the break-off tip embodiment.

### TIP BYPASS EMBODIMENT

Turning to FIGS. 14-18, in another embodiment of anchor 10c, at least one of intermediate portion 20c and 22c is penetrable by mounting fastener tip 36 so that mounting fastener tip 36 can bypass drilling tip 16c. In the embodiment shown in FIG. 15, bore 8c does not extend substantially into intermediate portion 20e so that substantially all of intermediate portion 20c and distal portion 22c are solid, best seen in FIG. 15. With little or no bore 8c in intermediate portion 20c and distal portion 22c, these portions can have a smaller diameter which makes anchor 10c easier to drive into drywall 1 and support member 2 because less torque is required, and allows anchor 10c to be driven into drywall 1 and support member 2 faster. In addition, the solid intermediate portion 20c and distal portion 22c also are structurally stronger. In one embodiment, intermediate portion 20c has a crest diameter MC" of between about 0,457 cm (0.18 inch) and about 0,558 cm (0.22 inch), preferably about 0,5 cm (0.2 inch), compared to the crest diameters described above for the break-off tip embodiment and the can-opener embodiment of anchor 10, 10b.

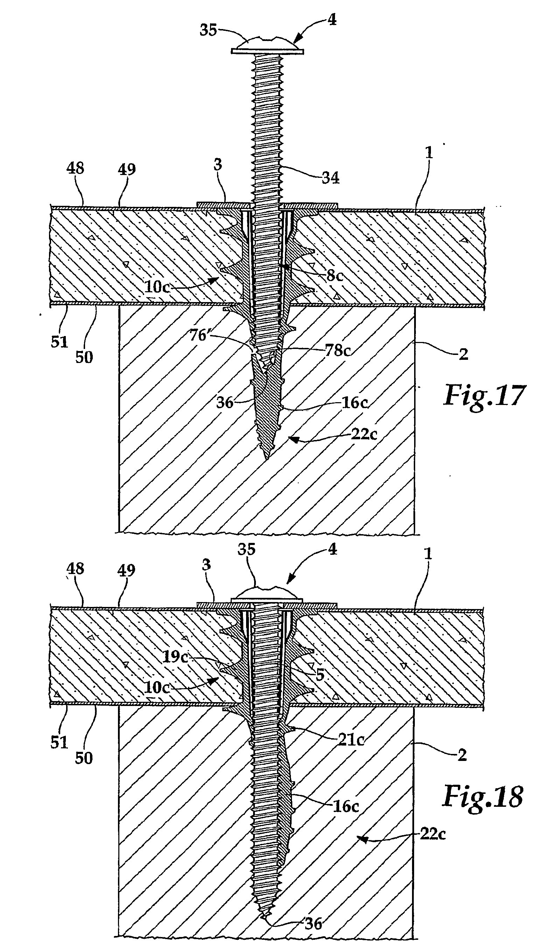

Bore 8c of anchor 10c is designed to cause mounting fastener 4 to cut and push through a thin region 76 of sidewall 38c. Mounting fastener 4 then pushes intermediate portion 20c and drilling tip 16e to the side as mounting fastener 4 passes, as shown in FIGS. 17-18. Intermediate portion 20c is designed to remain attached to anchor body 12c in order to be pushed aside by mounting fastener 4c, so that it remains engaged with support member 2, providing resistance to pullout and jacking of anchor 10c.

In the embodiment shown in FIG. 15, bore 8c includes a bearing surface 78c at bore end 9c angled toward thin region 76. As mounting fastener 4 is driven, its tip 36 bears against angled bearing surface 78c, creating a camming action that cams intermediate portion 20c and distal portion 22c aside.

Continuing with FIG. 16, thin region 76 can be achieved with a flat 52c that extends through intermediate portion 20. There can also be a notch 80 in intermediate portion 20 near the location where intermediate portion 20 meets proximal portion 18. Notch 80 aids the pivoting or camming action of intermediate portion 20 as it is pushed aside by mounting fastener 4.

### OPEN TIP EMBODIMENT

In an open tip embodiment of anchor 10d, shown in FIG. 19, distal portion 22d does not have a drilling point, but rather has an open drilling tip 16d. Open drilling tip 16d allows mounting fastener 4 to be driven so that mounting fastener tip 36 can extend through open drilling tip 16d without having to pierce through or break off part of anchor 10d, while open ended anchor 10d still grips support member 2.

Anchor 10d is similar to anchor 10 of the break-off tip embodiment, except with a portion of the drilling tip removed at a predetermined axial distance from the drilling point. It is preferred that the inner diameter of bore 8d, which extends all the way to drilling tip 16d, be larger than the root diameter of threaded mounting fastener 4, and preferably approximately equal to or slightly larger than the crest diameter of threaded mounting fastener 4 so that mounting fastener 4 does not have to excessively pierce through drilling tip 16d.

Preferably, open drilling tip 16d includes a centering element 82, see FIG. 19, which can be engaged with drywall 1 at the initiation of drilling 1 to ensure that anchor 10d is drilled into drywall 1 at the desired position. Centering element 82 may include a set of thin legs 83 which meet at a point 84. Thin legs 83 have enough structural integrity to be able to initially drill through drywall 1, but eventually legs 83 may collapse due to the force of driving anchor 10d into drywall 1 and support member 2.

### METHOD OF INSTALLATION

The method by which a user installs an anchor 10 and an elongated mounting fastener 4 in drywall 1 mounted on a member comprises the steps of providing an elongated anchor 10 having an axis 6, an axial bore 8 adapted to receive an elongated mounting fastener 4, a flared end 14 having torque transmitting surfaces 15 therein, a drilling tip 16 generally opposite flared end 14, a proximal portion 18 proximate flared end 14, an intermediate portion 20, and a distal portion 22 extending to drilling tip 16, wherein proximal portion 18 has a threaded exterior, such as drywall gripping threading 19, having a root 26, a crest 27 with a crest diameter DC, and a thread height DH, intermediate portion 20 has a threaded exterior, such as member gripping threading 21, having a root 28, a crest 29 with a crest diameter MC substantially smaller than drywall gripping threading crest diameter DC, and a thread height MH substantially smaller than drywall gripping thread height DH, and distal portion 22 has a threaded exterior, such as drilling threading 23, having a root 30 that tapers toward drilling tip 16, a crest 31 with a crest diameter TC substantially smaller than drywall gripping threading crest diameter DC, and a thread height TH substantially smaller than drywall gripping thread height DH, positioning drilling tip 16 on drywall surface 48, driving anchor 10 into drywall 1 so that distal portion 22 drills through drywall 1 and into support member 2, and drywall gripping threading 19 engages drywall, and inserting elongated mounting fastener 4 into axial bore 8 of anchor 10.

In one embodiment, the method of installation can further include the steps of extending mounting fastener tip 36 beyond the original position of drilling tip 16, piercing at least one of intermediate portion 20 or distal portion 22 with elongated mounting fastener 4, such as by cutting through wall 38b at intermediate portion 20b with mounting fastener threading 5, as shown in FIG. 13, or piercing through side wall 38c of intermediate portion 20c or drilling tip 16c with mounting fastener tip 36, as shown in FIGS. 17-18, breaking off a portion of anchor 10, such as drilling tip 16' with mounting fastener 4, as shown in FIG. 7, engaging mounting fastener 4 with support member 2, and mounting an article 3 onto mounting fastener 4, as shown in FIGS. 7, 10, 13, and 18.

### METHOD OF MAKING

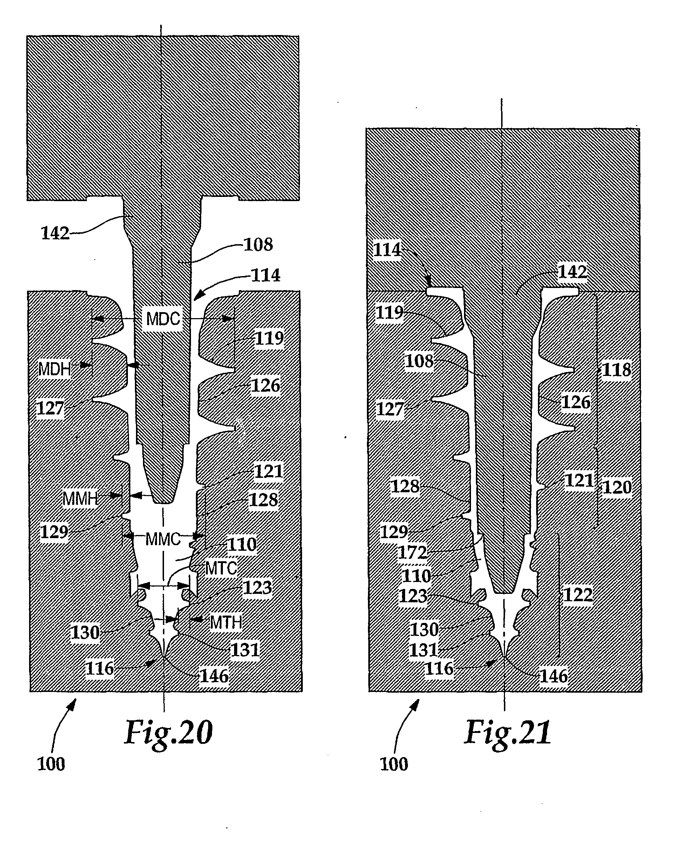

Turning to FIGS. 20 and 21, a method of making anchor 10 comprises the steps of providing a mold 100 having a cavity 110 with a flared end 114, a proximal section 118 proximate flared end 114, an intermediate section 120, a distal section 122, a second end 116 generally opposite flared end 114, and an elongated core 108 extending into cavity 110 at flared end 114, wherein proximal section 118 has interior threading 119 with a root 126, a crest 127 with a crest diameter MDC, and a thread height MDT, intermediate section 120 has interior threading 121 with a root 128, a crest 129 having a crest diameter MMC substantially smaller than first section crest diameter MDC, and a thread height MMT substantially smaller than first section thread height MDT, distal section 122 has interior threading 123 with a root 130 that tapers toward second end 116, a crest 131 having a crest diameter MTC substantially smaller than first section crest diameter MDC, and a thread height MTH substantially smaller than first section thread height MDH, feeding molten material, such as a zinc alloy, into cavity 110, setting the molten material to form anchor 10, and removing anchor 10 from mold 100.

Mold cavity 110 has the same shape as anchor 10 so that when the material sets, anchor 10 is formed. Specifically, flared end 114 of mold forms flared end 14 of anchor 10, second end 116 of mold forms drilling tip 16, proximal section 118 forms proximal portion 18, intermediate section 120 forms intermediate portion 20, distal section 122 forms distal portion 22, and elongated core 108 forms axial bore 8.

The novel anchor of the present invention allows a user to install the anchor in drywall without being concerned about whether or not a member is located behind the drywall at the anchoring location or, as may be the case, when it is known that there is a member present. The anchor also allows the user to use mounting fasteners of varying lengths because the mounting fastener tip can be extended past the drilling end of the anchor.
The embodiments of Figures 1-21 have been described to better understand the background of the invention of this case and, hence, the invention itself.

### SMALL HEAD EMBODIMENT

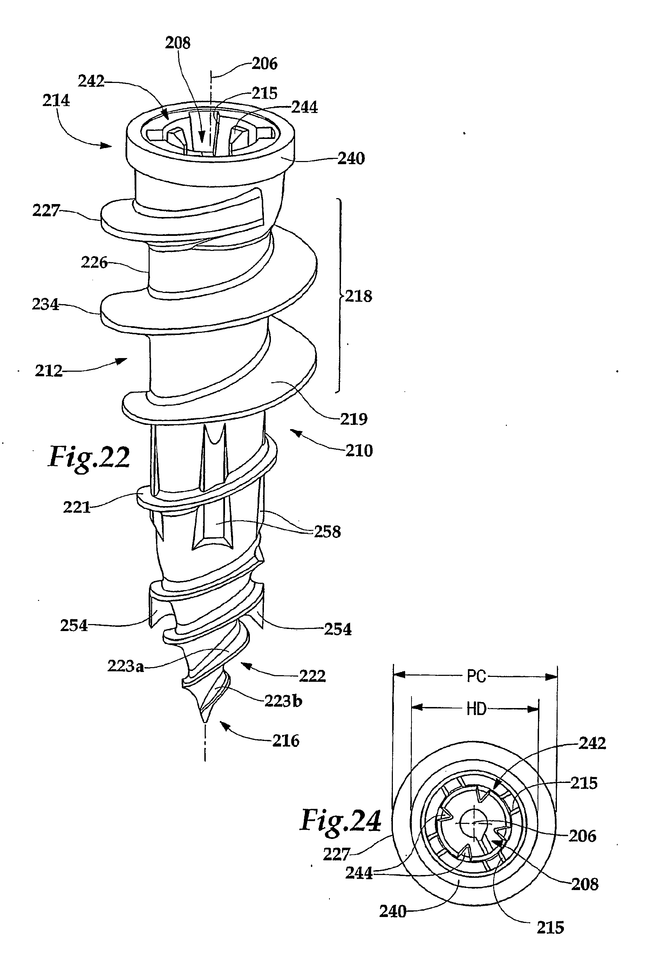

Turning now to the embodiment shown in FIGS. 22-24, an anchor 210 for use in a friable material, such as drywall 1, includes a body 212 having an axis 206, an axial bore 208 adapted to receive a mounting fastener, a proximal end 214, and a drilling end 216. A proximal portion 218 adjacent proximal end 214 has threading 219 for engaging drywall 1, and a drilling portion 224 adjacent drilling end 216. Threading 219 has a root 226 with a root diameter PR and a crest 227 with a crest diameter PC. A head 240 at proximal end 214 has an outer diameter HD that is smaller than crest diameter PC. Anchor 210 includes features which help prevent blistering of drywall 1 as anchor 210 is advanced through drywall 1.

### HEAD

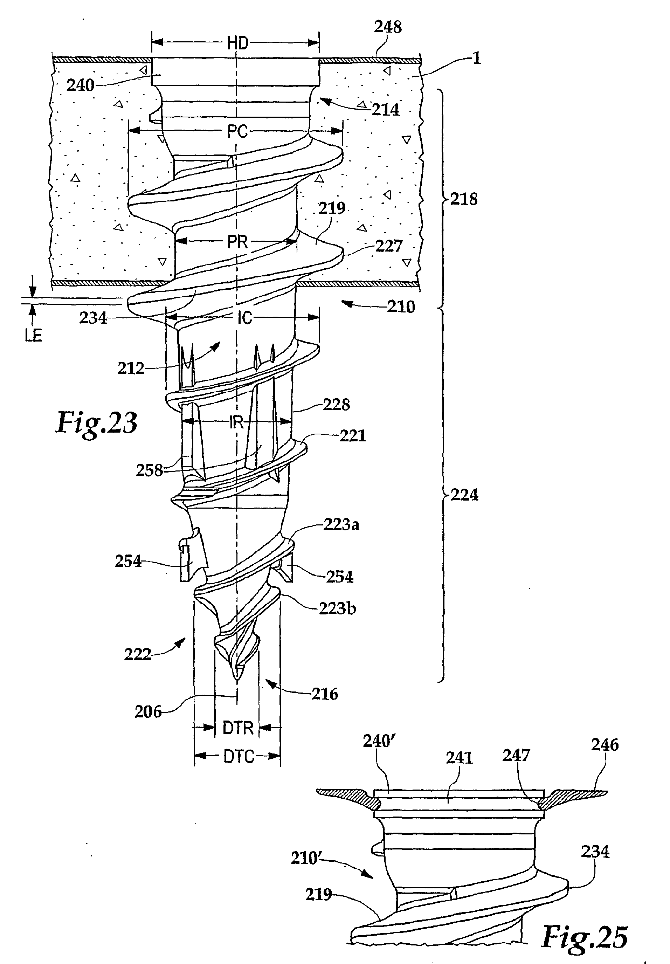

Turning to FIGS. 23 and 24, head 240 is configured for minimizing visible distortion, or blistering, of drywall 1 as anchor 210 is advanced into the friable material of drywall 1. Head 240 may have a diameter HD that is significantly smaller than conventional anchor heads and flanges, such as flange 40 shown in the embodiment of FIGS. 1-3. The small outer diameter HD of head 240 reduces the area of head 240 that pushes through drywall 1 as anchor 210 is seated.

Head 240 is connected to proximal end 214 of body 212 and includes an axial recess 242 for a driver, such as the tip of a screwdriver. Recess 242 includes torque transmitting surfaces 215 which allow the driver to impart torque onto anchor 210 to rotate it. In one embodiment, shown in FIG. 24, recess 242 has a Phillips shape in order to receive a Plullips screwdriver or Phillips bit from a powered screwdriver.

Head 240 has an outer diameter HD that is smaller than the largest outer or crest diameter PC of drywall engaging threading 219. Root 226 of proximal portion 218 displaces and bores a hole through drywall 1 as anchor 210 is driven, therefore, preferably the diameter HD of head 240 is as close to the root diameter PR of drywall threading 219 as possible, allowing head 240 to only slightly protrude beyond this hole in drywall 1, so that there is a small amount of drywall 1 for head 240 to displace. The small outer diameter HD also allows head 240 to be easily hidden behind small articles mounted on the mounting fastener, such as small curtain brackets and small cleats, so that once the small article is mounted, anchor head 240 is hidden from view.

The outer diameter HD of head 240 should be small enough to effectively prevent blistering of drywall 1, yet large enough so head 240 will accommodate recess 242 while still having walls of body 212 at proximal end 214 surrounding recess 242 that are thick enough to provide enough structural integrity to withstand the torque needed to drive anchor 210 through drywall 1, and preferably to drive anchor 210 through drywall 1 and a support member 2 on which drywall 1 is mounted, such as a wood stud, without breaking anchor 210.

In one embodiment, head 240 has an outer diameter HD that is between about 50% and about 85%, preferably between about 75% and about 80%, of the crest diameter PC. In one embodiment, head diameter HD is about 78% of crest diameter PC. Desirably, the outer diameter IID of head 240 is substantially similar to the root diameter PR of threading 219, and may be between about 1 and about 1.5 times the root diameter PR, preferably between about 1.25 and about 1.45. In one embodiment, shown in FIG. 23, the outer diameter HD of head 240 is about 1.38 times the root diameter PR.

In one embodiment, the outer diameter HD of head 240 may be between about 0,635 cm (0.25 inch) and about 1,016 cm (0.4 inch), preferably between about 0,762 cm (0.3 inch) and about 0,889 cm (0.35 inch), and in one embodiment about 0,86 cm (0,34 inch) while threading 219 has a crest diameter PC of between about 1,016 cm (0.4 inch) and about 1,27 cm (0.5 inch), preferably between about 1,066 cm (0.42 inch) and about 1,143 cm (0.45 inch), and in one embodiment about 1,092 cm (0.43 inch) and threading 219 has a root diameter PR of between about 0,5 cm (0.2 inch) and about 0,762 cm (0.3 inch), preferably between about 0,571 cm (0.225 inch) and about 0,635 cm (0.25 inch) and in one embodiment about 0,622 cm (0.245 inch).

Because head 240 is small relative to drywall engaging threading 219, it may be difficult for a user to determine when anchor 210 has been driven to the proper depth. The usual indication that an anchor has been driven to the proper depth is the increased torque the user feels when a large head seats in the drywall 1. With the embodiment shown in FIG. 23, the user may not feel this torque ramp-up because head 240 has a small outer diameter HD. Therefore, the user may have to determine the proper installation depth of anchor 210 visually by driving anchor 210 until it appears head 240 is at a proper depth that is flush with or just below drywall surface 248.

Turning to FIG. 25, in an alternative embodiment of anchor 210', an annular washer or cap 246 is mounted to head 240 so that when anchor 210' is driven to the proper depth and head 240' is properly position within drywall 1, cap 246 is dislodged from its engagement with head 240' and pops off. Head 240' may include a groove 241 for receiving cap 246 and cap 246 may include an interior lip 247 of annular cap 246 that complements groove 241, as shown in FIG. 25, so that cap 246 will be securely held in engagement with head 240' until the point when cap 246 is meant to pop off. Cap 246 is preferably made from a plastic material and may be formed by cutting an annular disc with the proper dimensions out of a plastic sheet, or by molding a plastic washer.

### PROXIMAL PORTION

Returning to FIGS. 22 and 23, proximal portion 218 is similar to proximal portion 18 of the anchor 10 shown in FIGS. 1-3 in that proximal portion 218 includes high threading 219 for engaging drywall 1, wherein threading 219 has a root 226 with a root diameter PR and a crest 227 with a crest diameter PC. Preferably, threading 219 is also configured to minimize visible distortion of drywall 1 as anchor 210 is driven by helping to prevent the formation of blistering at drywall surface 248.

In order to help prevent blistering, the crest diameter PC of threading 219 may be reduced slightly so that there is less surface area of threading 219 being pushed through drywall 1 as anchor 210 is driven. In one embodiment, best seen in FIG. 23, the reduction in crest diameter is accomplished by providing a generally flat land 234 at crest 227 of threading 219 instead of the substantially angled crest 27 of the embodiment of anchor 10 shown in FIGS. 1-3. The generally flat land 234 shifts crest 227 inwardly slightly so that the overall crest diameter PC is reduced. The crest diameter PC may be reduced by between about 2% and about 10%, preferably between about 3% and about 7%, and in one embodiment by about 5% from what crest diameter PC would be without land 234.

In one embodiment, threading 219 comprises a generally helical thread 219 and land 234 is a generally helical band that extends along crest 227 of thread 219. Preferably, the surface of land 234 is generally parallel to axis 206. Thread 219 with land 234 may be formed by molding or casting anchor 210 that includes land 234, or by initially forming threading 219 similar to threading 19 of anchor 10, and then forming land 234 by filing down or otherwise reducing and flattening crest 227 of threading 219.

Providing a generally flat land 234 at crest 227 instead of merely making an angled crest with a smaller crest diameter is desirable because the axial thickness of threading 219 remains the same as it would be if land 234 were not formed. This is desired because threading 219 provides much of the structural support of anchor body 212 as it is driven through drywall 1 and support member 2, and the thicker threading 219 is, the more strength threading 219 has to support body 212.

Land 234 should having an axial extent LE that is large enough so that the crest diameter PC of threading 219 is small enough to prevent blistering of drywall 1, yet have an axial extent LE that is small enough so that the crest diameter PC of threading 219 still provides adequate holding strength in drywall 1 and so that threading 219 provides adequate structural strength when driving into drywall 1 and support member 2. The axial extend LE of head 240 may be between about 2% and about 10% of the crest diameter PC of threading 219, and preferably between about 4.5% and about 6% of crest diameter PC. For one embodiment, the axial extent LE of land 234 is between about 0,038 cm ( 0.015 inch) and about 1,016 cm (0.04 inch), preferably between about 0,5 cm ( 0.02 inch) and about 0,0635 cm (0.025 inch),

### DRILLING PORTION

Continuing with FIGS. 22 and 23, anchor body 212 includes a drilling portion 224 for drilling through drywall 1, and preferably for driving anchor 210 into a support member, such as a wood stud. Drilling portion 224 may include an intermediate portion 220 and a drill tip 222, similar to intermediate portion 20 and distal portion 22 of anchor 10, shown in Figs 1-3.

Intermediate portion 220 may also include threading 221, however, preferably threading 221 of intermediate portion 220 has a substantially smaller thread height and crest diameter IC from the thread height and crest diameter PC of drywall engaging threading 219 of proximal portion 218 so that if a support member is encountered, the torque required to drive intermediate portion threading 221 through the support member will not be overly high. Intermediate portion threading 221 engages the support member, if one is encountered, to further secure anchor 210 within drywall 1 and the support member. The root 228 of intermediate portion threading 221 has generally the same diameter IR as root diameter PR of proximal portion 218. Root 226 of proximal portion 218 and root 228 of intermediate portion 220 may be tapered slightly as body 212 extends from head 240 toward drill tip 222. In one embodiment, intermediate portion 220 includes a generally helical thread 221 that continues from generally helical thread 219 of proximal portion 218 with a transition between the high thread height and crest diameter PC of proximal portion threading 219 and the substantially smaller thread height and crest diameter IC of intermediate portion threading 221.

Continuing with FIG. 23, drill tip 222 may be similar to distal portion 22 of anchor 10. Preferably, drill tip 222 is generally conical and may include threading 223a, 223b with a small thread height and crest diameter DTC so that threading 223a, 223b can engage a support member without making it overly difficult for a user to drive drill tip 222 through the support member. In one embodiment, drill tip threading 223a, 223b comprises two generally helical threads 223a, 223b arranged in a double helix around drill tip 222. One of the two generally helical threads 223a may continue from generally helical thread 221 of intermediate portion 220. The double helix threads 223a, 223b allow drill tip 222 to be driven evenly into the support member and provide additional strengthening evenly around drill tip 222. Drill tip 222 or intermediate portion 220 may also include one or more wings 254 for drilling through drywall 1 so that the hole bored through drywall 1 has the desired diameter. Preferably, wings 254 are designed to break off anchor 210 is they encounter a support member, as described above, so that wings 254 do not drill through the support member.

In a preferred embodiment, anchor 210 includes a body 212 having an axis 206, an axial bore 208 adapted to receive a mounting fastener, a proximal end 214, a high-threaded proximal portion 218 extending from proximal end 214 having threading 219 for engaging friable material such as drywall 1, and a self-drilling portion 224 having threading 221, 223a, 223b for engaging a substrate, such as a support member, adjacent to drywall 1 and a length longer than a thickness of drywall 1, wherein threading 219 of proximal portion 218 has a root diameter PR and a crest diameter PC, wherein threading 221, 223a, 223b of self-drilling portion 224 has a root diameter IR, DTR and a crest diameter IC, DTC substantially smaller than the crest diameter PC of proximal portion 218, and a head 240 at proximal end 214 having an outer diameter HD that is smaller than the crest diameter PC of threading 219 of said proximal portion 218.

Threading 221, 223a, 223b of intermediate portion 220 and drill tip 222 may also include a generally flat land at their crests 229, 231 to further prevent blistering of drywall 1, however, in the preferred embodiment, threading 221, 223a, 223b of drilling portion 224 does not include a generally flat land as does threading 219 of proximal portion 218.

Preferably, anchor 210 includes one or more strengthening members disposed on body 212 to provide structural support to anchor 210 to withstand a torsion force required for drilling end 216 of anchor 210 to penetrate a support member adjacent to drywall 1, which may be substantially harder than drywall 1, if it is encountered. As shown in FIGS. 22 and 23, the strengthening members may be ribs 258 on the outer surface of body 212 or splines 244 within bore 208, wherein the splines 244 also engage threads of the mounting fastener. Threading 221, 223a, 223b on intermediate portion 220 and drill tip 222 also provides strengthening and support to body 212 to ensure that drill tip 222 and intermediate portion 220 will penetrate a hard support member, such as a wood stud without collapsing.

## Claims

1. A self-drilling anchor for use in a friable material comprising :
a body (212) having an axis, an axial bore (208) adapted to receive a fastener, a proximal end (214), a
drilling end (216), a proximal portion (218) adjacent said proximal end having threading (219) for engaging said friable material, and a drilling portion (224) adjacent said drilling end; said threading having a root (226) with a root diameter and a crest (227) with a crest diameter; and
a head (240) at said proximal end having an outer diameter that is smaller than said crest diameter for minimizing visible distortion of said friable material as said anchor is advanced into said friable material.

2. A self-drilling anchor according to claim 1, wherein said outer diameter of said head (240) between about 50% and about 85% of said crest diameter.

3. A self-drilling anchor according to claim 1, wherein said outer diameter of said head (240) is between about 1 and about 1.5 times said root diameter.

4. A self-drilling anchor according to claim 1, wherein said threading (219) further comprises a generally flat land (234) at said crest (227) having an outer land diameter defining said crest diameter.

5. A self-drilling anchor according to claim 4, wherein said generally flat land (234) has an axial extent of between about 0.384mm (0.0015 inch), and about 0.768mm (0.03 inch).

6. A self-drilling anchor according to claim 1, wherein said threading (219) is configured for minimizing visible distortion of said friable material as said anchor is advanced into said friable material.

7. A self-drilling anchor according to claim 1, wherein said head (240) has an outer diameter that is substantially similar to said root diameter.

8. A self-drilling anchor according to claim 1 to 7 wherein said proximal portion (218) is a
high-threaded proximal portion and said drilling portion (224) has threading (221) for engaging a substrate adjacent to said friable material and a length longer than a thickness of said friable material;
said threading (221) of said drilling portion (224) has a root diameter and a crest diameter substantially smaller than said crest diameter of said proximal portion (218).

9. A self-drilling anchor according to one of claims 1 to 8, further comprising a strengthening member (258) disposed on said body to provide sufficient structural support to said body to withstand a torsion force required for the drilling end to penetrate a substrate adjacent the friable material.

## Patentansprüche

1. Selbstbohrender Ankerbolzen zur Verwendung in einem bröckeligen Material, welcher aufweist:
einen Körper (212) mit einer Achse, einer axialen Bohrung (208), die dazu eingerichtet ist, ein Befestigungselement aufzunehmen, einem proximalen Ende (214), einem Bohrende (216), einem dem proximalen Ende benachbarten proximalen Abschnitt (218), der ein Gewinde (219) zum Eingreifen in das bröckelige Material aufweist, und einem dem Bohrende benachbarten Bohrabschnitt (224); wobei das Gewinde einen Kern (226) mit einem Kerndurchmesser und eine Spitze (227) mit einem Spitzendurchmesser aufweist; und
einen Kopf (240) an dem proximalen Ende mit einem Außendurchmesser, welcher kleiner als der Spitzendurchmesser ist, um die sichtbare Verformung des bröckeligen Materials zu minimieren, wenn der Ankerbolzen in das bröckelige Material hinein vorwärtsbewegt wird.

2. Selbstbohrender Ankerbolzen nach Anspruch 1, wobei der Außendurchmesser des Kopfes (240) zwischen etwa 50 % und etwa 85 % des Spitzendurchmessers liegt.

3. Selbstbohrender Ankerbolzen nach Anspruch 1, wobei der Außendurchmesser des Kopfes (240) das etwa 1-bis etwa 1,5-fache des Kerndurchmessers beträgt.

4. Selbstbohrender Ankerbolzen nach Anspruch 1, wobei das Gewinde (219) ferner einen im Wesentlichen flachen Steg (234) an der Spitze (227) mit einem äußeren Stegdurchmesser, der den Spitzendurchmesser definiert, aufweist.

5. Selbstbohrender Ankerbolzen nach Anspruch 4, wobei der im Wesentlichen flache Steg (234) eine axiale Erstreckung zwischen etwa 0,384 mm (0,0015 Inch) und etwa 0,768 mm (0,03 Inch) aufweist.

6. Selbstbohrender Ankerbolzen nach Anspruch 1, wobei das Gewinde (219) dafür ausgebildet ist, die sichtbare Verformung des bröckeligen Materials zu minimieren, wenn der Ankerbolzen in das bröckelige Material hinein vorwärtsbewegt wird.

7. Selbstbohrender Ankerbolzen nach Anspruch 1, wobei der Kopf (240) einen Außendurchmesser aufweist, welcher im Wesentlichen dem Kerndurchmesser ähnlich ist.

8. Selbstbohrender Ankerbolzen nach Anspruch 1 bis 7, wobei der proximale Abschnitt (218) ein mit einem hohen Gewinde versehener proximaler Abschnitt ist und der Bohrabschnitt (224) ein Gewinde (221) zum Eingreifen in ein dem bröckeligen Material benachbartes Substrat und eine Länge, die größer als eine Dicke des bröckeligen Materials ist, aufweist;
wobei das Gewinde (221) des Bohrabschnitts (224) einen Kerndurchmesser und einen Spitzendurchmesser aufweist, die wesentlich kleiner als der Spitzendurchmesser des proximalen Abschnitts (218) sind.

9. Selbstbohrender Ankerbolzen nach einem der Ansprüche 1 bis 8, welcher ferner ein Versteifungselement (258) aufweist, das an dem Körper angeordnet ist, um dem Körper eine ausreichende strukturelle Abstützung zu verleihen, um einer Torsionskraft standzuhalten, die für das Bohrende erforderlich ist, um in ein dem bröckeligen Material benachbartes Substrat einzudringen.

## Revendications

1. Ancrage auto-perceur destiné à l'utilisation dans un matériau friable, comprenant :
un corps (212) muni d'un axe, un alésage axial (208) prévu pour recevoir une attache, une extrémité proximale (214), une extrémité de perçage (216), une portion proximale (218) adjacente à ladite extrémité proximale, munie d'un filetage (219) pour s'engager dans ledit matériau friable, et une portion de perçage (224) adjacente à ladite extrémité de perçage ; ledit filetage ayant un fond (226) avec un diamètre de fond et une crête (227) avec un diamètre de crête ; et
une tête (240) au niveau de ladite extrémité proximale, ayant un diamètre extérieur plus petit que ledit diamètre de crête pour minimiser la distorsion visible dudit matériau friable à mesure que ledit ancrage progresse à l'intérieur dudit matériau friable.

2. Ancrage auto-perceur selon la revendication 1, dans lequel ledit diamètre extérieur de ladite tête (240) représente entre environ 50 % et environ 85 % dudit diamètre de crête.

3. Ancrage auto-perceur selon la revendication 1, dans lequel ledit diamètre extérieur de ladite tête (240) est compris entre environ 1 et environ 1,5 fois ledit diamètre de fond.

4. Ancrage auto-perceur selon la revendication 1, dans lequel ledit filetage (219) comprend en outre un méplat généralement plat (234) au niveau de ladite crête (227), ayant un diamètre de méplat extérieur définissant ledit diamètre de crête.

5. Ancrage auto-perceur selon la revendication 4, dans lequel ledit méplat généralement plat (234) présente une étendue axiale comprise entre environ 0,384 mm (0,0015 pouce) et environ 0,768 mm (0,03 pouce).

6. Ancrage auto-perceur selon la revendication 1, dans lequel ledit filetage (219) est configuré de manière à minimiser les distorsions visibles dudit matériau friable à mesure que ledit ancrage progresse à l'intérieur dudit matériau friable.

7. Ancrage auto-perceur selon la revendication 1, dans lequel ladite tête (240) présente un diamètre extérieur sensiblement similaire audit diamètre de fond.

8. Ancrage auto-perceur selon les revendications 1 à 7, dans lequel ladite portion proximale (218) est une portion proximale à haut filetage et ladite portion de perçage (224) présente un filetage (221) destiné à s'engager avec un substrat adjacent audit matériau friable et une longueur supérieure à une épaisseur dudit matériau friable
ledit filetage (221) de ladite portion de perçage (224) présente un diamètre de fond et un diamètre de crête sensiblement plus petit que ledit diamètre de crête de ladite portion proximale (218).

9. Ancrage auto-perceur selon l'une quelconque des revendications 1 à 8, comprenant en outre un organe de renforcement (258) disposé sur ledit corps pour fournir audit corps un support structurel suffisant de manière à résister à une force de torsion requise pour que l'extrémité de perçage pénètre à travers un substrat adjacent au matériau friable.
